# EUROPEAN PATENT SPECIFICATION

(11) **EP 1 521 324 B1**
(45) Date of publication and mention of the grant of the patent: **18.06.2008**
(21) Application number: 04021583.2
(22) Date of filing: 10.09.2004
(51) Int. Cl.: H01M 8/04

(54) **Fuel cell**
Brennstoffzelle
Pile à combustible

(30) Priority: 30.09.2003 JP 2003342336
(43) Date of publication of application: 06.04.2005
(73) Proprietor: KABUSHIKI KAISHA TOSHIBA, Tokyo 105-8001 (JP)
(72) Inventor: Tomioka, Kentaro, 1-chome, Minato-ku, Tokyo 105-8001 (JP); Matsuoka, Kei, 1-chome, Minato-ku, Tokyo 105-8001 (JP); Tomimatsu, Norihiro, 1-chome, Minato-ku, Tokyo 105-8001 (JP)
(74) Representative: Henkel, Feiler & Hänzel

(56) References cited:
- US-A- 3 589 942
- US-A- 3 623 913
- US-A- 5 981 096
- PATENT ABSTRACTS OF JAPAN vol. 1998, no. 11, 30 September 1998 (1998-09-30) -& JP 10 162842 A (MATSUSHITA ELECTRIC WORKS LTD), 19 June 1998 (1998-06-19)
- PATENT ABSTRACTS OF JAPAN vol. 2003, no. 11, 5 November 2003 (2003-11-05) -& JP 2003 187833 A (MATSUSHITA ELECTRIC IND CO LTD), 4 July 2003 (2003-07-04)

## Description

The present invention relates to a fuel cell usable as a power source for an electronic device or the like.

Currently, secondary batteries, such as lithium ion batteries, are mainly used as power sources for electronic devices, such as portable notebook personal computers (hereinafter referred to as notebook PCs), mobile devices, etc. These modern electronic devices have increasingly higher functions and require increased power consumption and longer operating time. To meet these requirements, compact, high-output fuel cells that require no charging are expected as novel power sources. There are fuel cells in various forms. A direct methanol fuel cell (hereinafter referred to as DMFC) that uses a methanol solution as its fuel, in particular, has an advantage over one that uses hydrogen as its fuel in enjoying easier fuel handling and simpler construction. Thus, the DMFC is a power source for an electronic device that is currently drawing a lot of attention.

Normally, a DMFC has a housing that houses a fuel tank, mixing tank, liquid pump, air pump, etc. The fuel tank contains high-concentration methanol. The methanol in the fuel tank is diluted with water in the mixing tank. The liquid pump pressure-feeds the methanol that is diluted in the mixing tank to an electromotive unit. The air pump is used to supply air to the electromotive unit. The electromotive unit comprises cells having an anode and a cathode each. It generates power based on a chemical reaction by feeding the diluted methanol and air to the anode and cathode sides, respectively. Since a single cell can produce only a low output, the electromotive unit is usually formed by laminating a plurality of cells.

According to a fuel cell described in Jpn. Pat. Appln. KOKAI Publication No. 7-6777, for example, heat that is produced by power generation is discharged into the housing via the surface of the electromotive unit and anode and cathode passages. Air in the housing is discharged for ventilation with a cooling fan or air blower that is attached to the inner surface of the housing. Thus, the fuel cell can be kept at a desired operating temperature without undergoing an excessive increase in temperature.

In the fuel cell described above, the electromotive unit is heated to high temperature with reaction heat that is produced by a chemical change. In general, the amount of heat produced by a fuel cell is proportional to the amount of power generation by it. In adjusting the temperature by cooling the fuel cell, it is most efficient to cool the electromotive unit that is heated to the highest temperature in the fuel cell.

In the electromotive unit that is formed by laminating a plurality of cells, however, differences in temperature easily occur between the cells, so that the cell outputs are variable and unstable. In some cases, moreover, polarity inversion or other failure may be caused by temperature differences.

JP10162842A discloses a fuel cell with the features of the preamble portion of claim 1. For cooling a fuel cell stack a fin formed thinner than a separator main body part is formed so as to project from one side of an outer peripheral side edge part of the separator main body part of the electromotive unit of the fuel cell.

It is the object of the present invention to,provide a fuel cell capable of solving a problem of water shortage and capable of stable and prolonged power generation.

A fuel cell according to the present invention comprises the features of claim 1. Preferred embodiments are defined in the dependent claims.

The invention can be more fully understood from the following detailed description when taken in conjunction with the accompanying drawings, in which:
FIG. 1 is a perspective view showing a fuel cell according to an embodiment of the invention;
FIG. 2 is a perspective view showing the fuel cell connected to a personal computer;
FIG. 3 is a sectional view showing the fuel cell and the personal computer;
FIG. 4 is a perspective view showing the interior of the fuel cell;
FIG. 5 is a plan view, partially in section, showing the fuel cell;
FIG. 6 is a view schematically showing a generator section of the fuel cell;
FIG. 7 is a view schematically showing an electromotive unit of the fuel cell;
FIG. 8 is a view typically showing a cell laminate structure of the electromotive unit;
FIG. 9 is a sectional view showing the electromotive unit; and
FIG. 10 is a view typically showing a cathode passage and a cathode cooler of the fuel cell.

A fuel cell according to an embodiment of the present invention will now be described in detail with reference to the accompanying drawings.

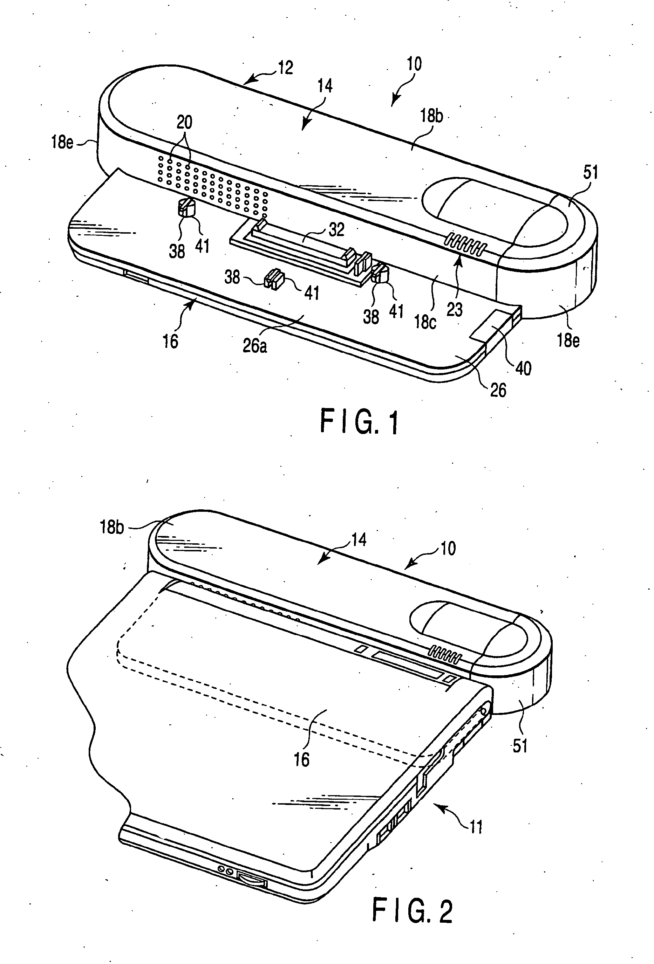

As shown in FIGS. 1 to 3, a fuel cell 10 is composed of DMFCs that use methanol as a liquid fuel. It can be used as a power source for an electronic device, such as a personal computer 11.

The fuel cell 10 is provided with a housing 12. The housing 12 has a substantially prism-shaped body 14 that extends horizontally and a bearer section 16 that extends from the body. The bearer section 16 is a flat rectangular structure that can carry a rear portion of the personal computer 11 thereon. The body 14 houses a fuel tank, electromotive unit, mixing tank, etc., which constitute a generator section 7 (mentioned later). A control section 29, a locking mechanism for locking the computer 11, etc. are arranged in the bearer section 16.

As shown in FIGS. 1 to 3, the body 14 has a flat bottom wall 18a, top wall 18b, front wall 18c, rear wall 18d, and a pair of sidewalls 18e. The bottom wall 18a is integral with a bottom wall of the bearer section 16. The top wall 18b extends substantially parallel to the bottom wall 18a. The front wall 18c is situated between the walls 18a and 18b. Each sidewall 18e has an outwardly convex curved surface. A large number of vents 20 are formed in the front wall 18c. Corresponding in position to the vents 20, a large number of vents 21 are formed in the rear wall 18d. One of the sidewalls 18e of the body 14 is formed having a large number of vents 22, which serve as exhaust holes. Legs 24 are arranged on the outer surface of the bottom wall 18a. Indicators 23 for indicating the operating state of the fuel cell are arranged on the front end portion of the top wall 18b of the body 14.

The bearer section 16 is provided with a flat top wall 26 that extends forward from the lower end portion of the front wall 18c of the body 14. The top wall 26 faces the front half of the bottom wall 18a across a gap and extends slightly declining from the body side. The top wall 26 forms a supporting surface 26a on which the personal computer 11 is placed.

As shown in FIGS. 1 to 4, the bearer section 16 houses the control section 29 for controlling the operation of the generator section 7 (mentioned later). The control section 29 is provided with a control circuit board 30 that is located in the bearer section 16 and extends substantially parallel to the top wall 26. Electronic components, including semiconductor devices 28 and a connector 32, are mounted on the circuit board 30. The connector 32 is located adjacent to the body 14 in the center of the bearer section 16 and projects from the supporting surface 26a through the top wall 26. Further, the control section 29 is provided with a power source (not shown) for driving the generator section 7.

The bearer section 16 houses a locking plate 34 that is movable in the longitudinal direction across the body 14. Three hooks 38, for example, are set up on the locking plate 34, which constitutes the locking mechanism, and project from the supporting surface 26a through the top wall 26. Located in the bearer section 16, moreover, is an eject lever 36, which moves the locking plate 34, along with the hooks 38, toward an unlocking position. An eject button 40 for actuating the eject lever 36 is provided on one side edge portion of the bearer section 16. Positioning protrusions 41 are formed adjacent to the hooks 38 on the supporting surface 26a.

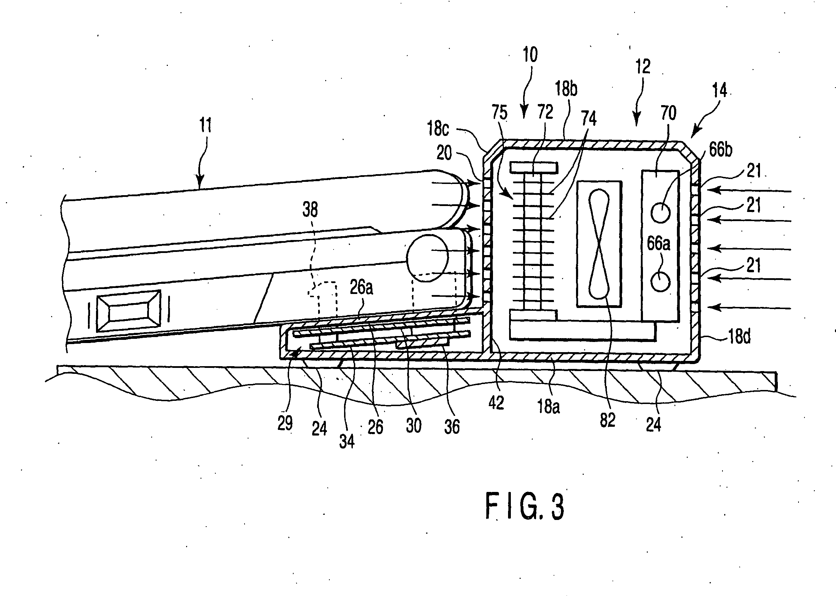

As shown in FIG. 3, the interior of the bearer section 16 that houses the control circuit board 30 and that of the body 14 in which the generator section 7 is located are divided by a partition wall 42 set up on the bottom wall 18a. The partition wall 42 is formed having a slot (not shown) through which wiring for electrically connecting the generator section 7 and the circuit board 30 is passed.

As shown in FIGS. 2 and 3, the rear end portion of the personal computer 11 is placed on the supporting surface 26a of the bearer section 16 in a manner such that it is positioned by the positioning protrusions 41. The computer 11 engages the hooks 38 and is locked in a mounting position. A connector (not shown) of the computer 11 is connected mechanically and electrically to the connector 32 of the bearer section 16. Thus, the fuel cell 10 and the personal computer 11 are connected mechanically and electrically to each other.

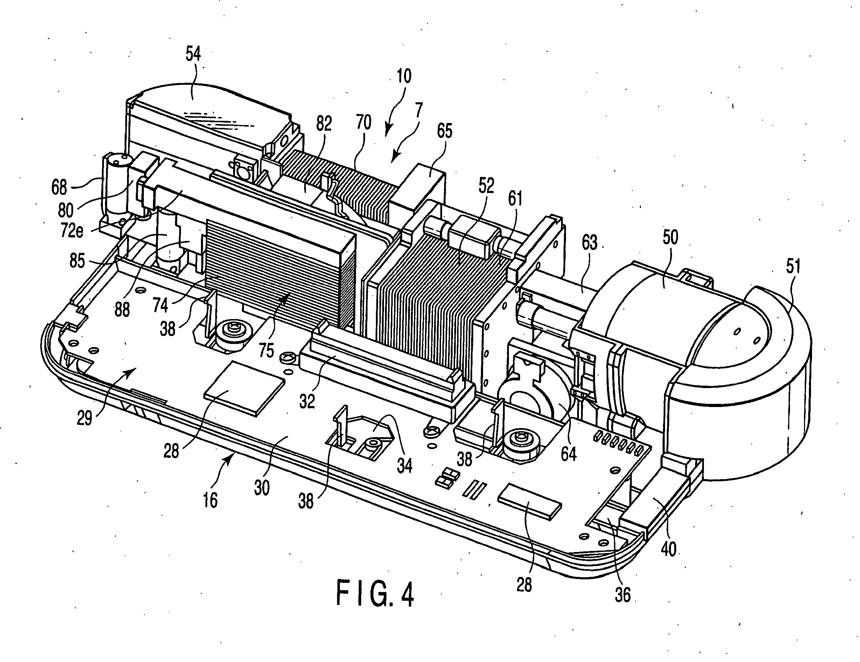

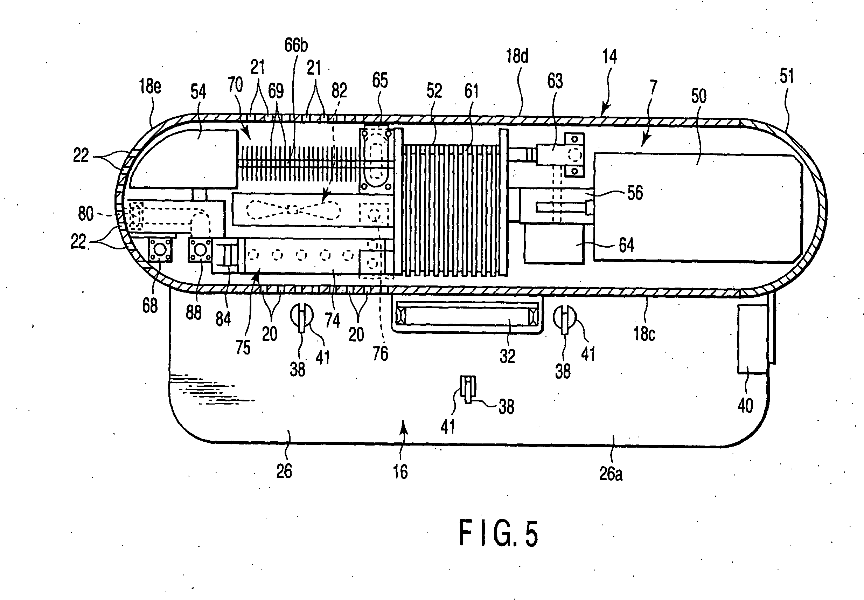

As shown in FIGS. 4 to 6, the generator section 7 comprises a fuel tank 50 on one side in the body 14, an electromotive unit 52 in the central portion of the body, and a mixing tank 54 on the other side in the body. The electromotive unit 52 generates power based on a chemical reaction. The fuel tank 50 contains high-concentration methanol as a liquid fuel. The tank 50 is formed as a cartridge that can be attached to and detached from the body 14. One side portion of the body 14 is formed as a cover 51 that can be removed when the tank 50 is attached or detached. The fuel tank 50 is connected to the mixing tank 54 by means of a fuel supply line (not shown). The fuel supply line is provided with a first liquid pump 56, which feeds the fuel from the fuel tank to the mixing tank.

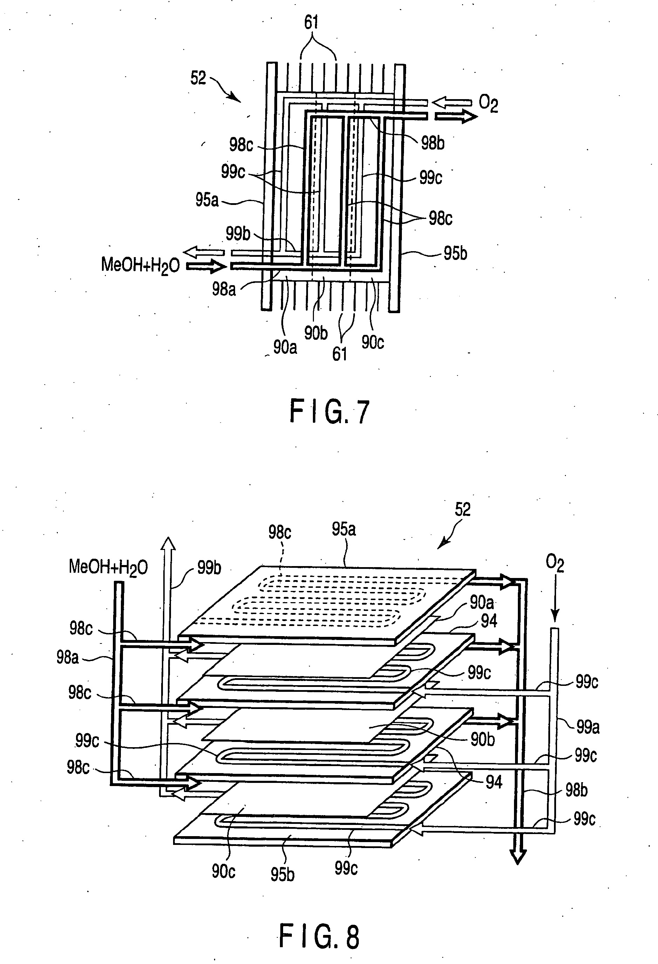

As shown in FIGS. 7 to 9, the electromotive unit 52 is formed by laminating a plurality of cells, e.g., three cells 90a, 90b and 90c. Tabular separators 94 are interposed individually between the cells 90a and 90b and between the cells 90b and 90c. End plates 95a and 95b are laminated individually to the opposite ends of the resulting structure in the direction of lamination of the cells, and extend at right angles to the lamination direction. The cell 90a is sandwiched between one of the separators 94 and the end plate 95a, and the cell 90c between the other separator 94 and the end plate 95c. The end plates 95a and 95b individually form end faces of the electromotive unit 52. The cells 90a, 90b and 90c and the separators 94 are surrounded and covered by sidewalls 96 that extend in the lamination direction. The sidewalls 96 individually form side faces of the electromotive unit 52. Each of the side faces of the electromotive unit 52, not including the pair of end faces, is provided with a large number of radiator fins 61 that serve as a cooling section. The fins 61 are arranged with gaps in the cell lamination direction between them and extend individually at right angles to the lamination direction.

Each of the cells 90a, 90b and 90c is formed of an anode (fuel electrode) 58a, a cathode (air electrode) 58b, and an electrolyte membrane 60 between the electrodes. The anode 58a of the cell 90a touches the inner surface of the end plate 95a with a carbon sheet 92a between them, and its cathode 58b touches one surface of one of the separators 94 with a carbon sheet 92b between them. The anode 58a of the cell 90b touches the other surface of the separator 94 with another carbon sheet 92a between them, and its cathode 58b touches one surface of the other separator 94 with another carbon sheet 92b between them. Further, the anode 58a of the cell 90c touches the other surface of the other separator 94 with still another carbon sheet 92a between them, and its cathode 58b touches the inner surface of the end plate 95b with still another carbon sheet 92b between them.

Formed in the electromotive unit 52 are fuel and air passages through which the fuel and air are run. Thus, the electromotive unit 52 is provided with a fuel supply passage 98a, fuel discharge passage 98b, and fuel dividing passages 98c. The passage 98a extends in the lamination direction of the cells 90a, 90b and 90c in the electromotive unit, and the fuel is supplied to the electromotive unit through it. The passage 98b extends in the cell lamination direction in the electromotive unit, and the fuel is discharged from the electromotive unit through it. The passages 98c diverge from the passage 98a and are connected to the passage 98b. The fuel is supplied to the respective anodes 58a of the cells through the passages 98c.

The fuel dividing passages 98c are defined individually by grooves that are formed on the inner surface of the end plate 95a and the respective anode-side surfaces of the separators 94. The passages 98c extend in a zigzag manner covering the whole are of the anodes 58a.

The electromotive unit 52 is provided with an air supply passage 99a, air discharge passage 99b, and air dividing passages 99c. The passage 99a extends in the lamination direction of the cells 90a, 90b and 90c in the electromotive unit, and air is supplied to the electromotive unit through it. The passage 99b extends in the cell lamination direction in the electromotive unit, and air is discharged from the electromotive unit through it. The passages 99c diverge from the passage 99a and are connected to the passage 99b. Air is supplied to the respective cathodes 58b of the cells through the passages 99c.

The air dividing passages 99c are defined individually by grooves that are formed on the inner surface of the end plate 95b and the respective cathode-side surfaces of the separators 94. The passages 99c extend in a zigzag manner covering the whole are of the cathodes 58b.

The electromotive unit 52 constructed in this manner is located in the body 14 so that the lamination direction of the cells 90a, 90b and 90c is substantially parallel to bottom wall 18a of the body.

As shown in FIGS. 4 to 6, the body 14 houses an air pump 64 that supplies air to the air supply passage 99a of the electromotive unit 52 through an air valve 63. The air pump 64 constitutes an air supply section. A fuel supply pipe 66a and a fuel recovery pipe 66b are connected between the electromotive unit 52 and the mixing tank 54. They form an anode passage through which the fuel is circulated between the anode 58a of the electromotive unit and the mixing tank 54. The fuel supply pipe 66a is connected to the fuel supply passage 98a of the electromotive unit 52. It is connected with a second liquid pump 68 that feeds the fuel from the mixing tank 54 to the electromotive unit 52. The fuel recovery pipe 66b is connected to the fuel discharge passage 98b of the electromotive unit 52. It is provided with a gas-liquid separator 65 for separating the fuel discharged from the electromotive unit 52 from carbon dioxide produced by the chemical reaction. A large number of vertically extending radiator fins 69 are mounted around the fuel supply pipe 66a and the fuel recovery pipe 66b, and constitute an anode cooler 70. The vents 21 in the rear wall 18d of the body 14 are opposed to the anode cooler 70.

As shown in FIGS. 3 to 6 and FIG. 10, a discharge pipe 72 is connected to the air discharge passage 99b of the electromotive unit 52 and forms a cathode passage through which products of power generation from the cathode 58b and air are discharged. The cathode passage has a first passage 72a, branch passages 72b, reservoir portion 72c, recovery passage 72d, and second passage 72e. The first passage 72a extends from the electromotive unit 52. The branch passages 72b diverge from the first passage and extend at an angle to the horizontal direction. The reservoir portion 72c communicates with the first passage and the respective lower ends of the branch passages. It stores water discharged from the first passage and water condensed in the branch passages. The recovery passage 72d guides the water stored in the reservoir portion into the mixing tank 54. The second passage 72e communicates with the respective upper ends of the branch passages. In the present embodiment, the branch passages 72b extend individually in the vertical direction.

The recovery passage 72d is provided with a recovery pump 76 that supplies the water in the reservoir portion 72c to the mixing tank 54. Located in the reservoir portion 72c, moreover, is a water level detector 77 that detects the level of the water in the reservoir portion.

A large number of horizontally extending radiator fins 74 are mounted around the discharge pipe 72 that forms the branch passages 72b, and constitute a cathode cooler 75. The cathode cooler 75, which includes the branch passages 72b, is opposed to the anode cooler 70 with a gap between them. The second passage 72e extends substantially horizontally and has an exhaust port 78, which is situated near the vents 22 of the body 14 and opens toward the vents 22. In the second passage 72e, an exhaust valve 80 is located near the exhaust port 78. The second passage 72e is provided with a gas discharge pipe 81, which guides carbon dioxide separated by the gas-liquid separator 65 into the second passage 72e. The vents 20 that are formed in the front wall 18c of the body 14 are opposed to the cathode cooler 75.

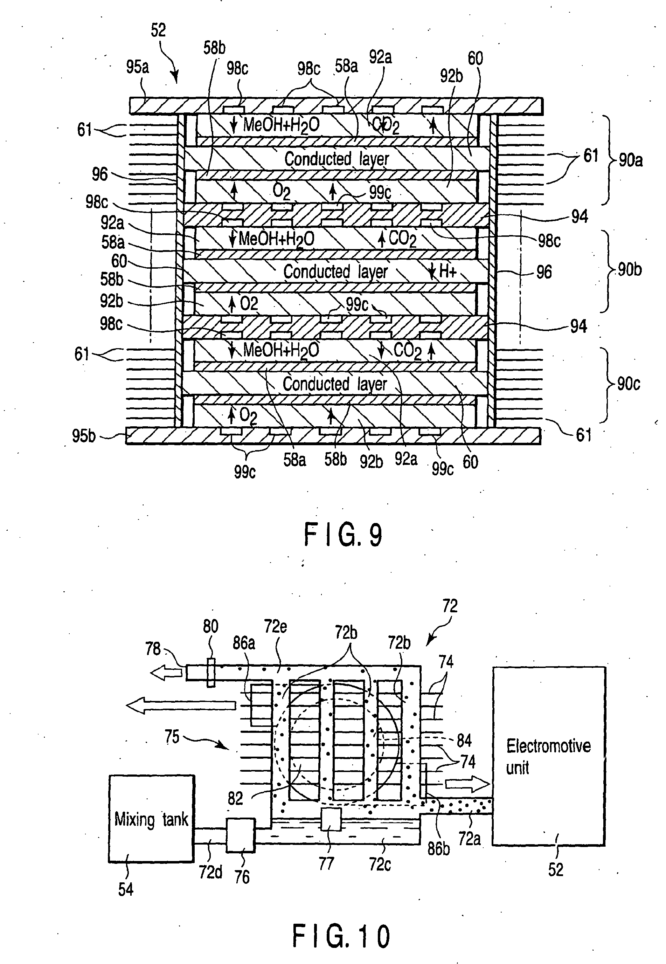

In the body 14, a cooling fan 82, a centrifugal fan, is arranged between and opposite the anode cooler 70 and the cathode cooler 75. The cooling fan 82 is located so that the rotation axis of its blades extends substantially horizontally and at right angles to the anode and cathode coolers 70 and 75. As is evident from FIG. 10, the cooling fan 82 has a fan case that covers the blades. The fan case is formed having two intake ports 84 opposed individually to the anode and cathode coolers 70 and 75 and two exhaust ports 86a and 86b that open in a direction tangent to the rotating direction of the blades. The one exhaust port 86a opens toward the vents 22 of the body 14, and the other exhaust port 86b toward the electromotive unit 52.

Further, the generator section 7 is provided with a concentration sensor 88 and a concentration detection pump 85. The sensor 88 detects the concentration of the fuel in the mixing tank 54. The pump 85 circulates the fuel in the mixing tank through the sensor.

The first and second liquid pumps 56 and 68, air pump 64, recovery pump 76, concentration detection pump 85, air valve 63, exhaust valve 80, and cooling fan 82, which are arranged in the body 14 and constitute the generator section 7, are connected electrically to the control circuit board 30 and controlled by the circuit board. The water level detector 77 and the concentration sensor 88 are connected to the control circuit board 30, and deliver their respective detection signals to the circuit board. Wires (not shown) that connect these electrical parts, sensors, and control circuit board 30 are pulled around from inside the body 14 into the bearer section 16 through the slot (not shown) in the partition wall 42.

If the fuel cell 10 constructed in this manner is used as a power source for the personal computer 11, the rear end portion of the computer is first placed on the bearer section 16 of the fuel cell, locked in position, and connected electrically to the fuel cell through the connector 32. In this state, the power generation by the fuel cell 10 is started. In this case, methanol is supplied from the fuel tank 50 to the mixing tank 54 by the first liquid pump 56 and diluted to a given concentration with water for use as a solvent that flows back from the electromotive unit 52. The methanol that is diluted in the mixing tank 54 is supplied through the anode passage to the electromotive unit 52 by the second liquid pump 68.

As shown in FIGS. 7 to 9, the methanol supplied to the electromotive unit 52 flows into the fuel dividing passages 98c through the fuel supply passage 98a. As it flows through the passages 98c, the methanol is supplied to the anodes 58a of the corresponding cells. Those portions of the methanol having passed through the fuel dividing passages 98c join together in the fuel discharge passage 98b, and the methanol is discharged into the anode passage through the passage 98b.

On the other hand, air is supplied to the air supply passage 99a of the electromotive unit 52 by the air pump 64. The supplied air flows into air dividing passages 99c through the air supply passage 99a. As it flows through the passages 99c, the air is supplied to the cathodes 58b of the corresponding cells. Those portions of the air having passed through the air dividing passages 99c join together in the air discharge passage 99b, and the air is discharged into the cathode passage through the passage 99b.

The methanol and air supplied to the cells 90a, 90b and 90c in this manner undergo chemical reaction in the electrolyte membrane 60 between the anode 58a and the cathode 58b. Thereupon, electric power is generated between the anode 58a and the cathode 58b. The power generated in the electromotive unit 52 is supplied to the personal computer 11 through the control circuit board 30 and the connector 32.

As the power generation reaction advances, carbon dioxide and water are produced as reaction products on the sides of the anode 58a and the cathode 58b, respectively, of the electromotive unit 52. The carbon dioxide that is formed on the anode side and the methanol are fed into the gas-liquid separator 65 and subjected to gas-liquid separation in it. Thereafter, the carbon dioxide is delivered to the cathode passage through the gas discharge pipe 81. The methanol is returned to the mixing tank 54 through the anode passage.

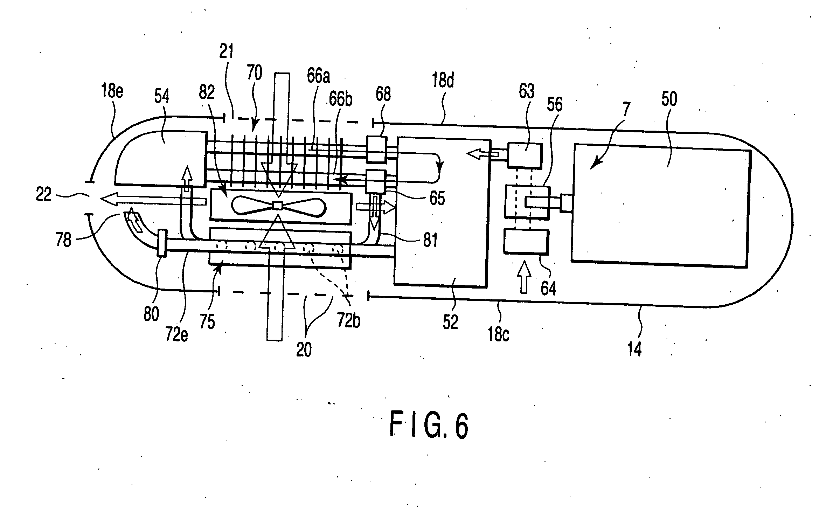

As shown in FIGS. 6 and 10, most of the water produced on the side of the cathode 58b is converted into steam, which, along with air, is discharged into the cathode passage. The discharged water and steam pass through the first passage 72a, and the water is delivered to the reservoir portion 72c. The steam and air flow upward through the branch passages 72b to the second passage 72e. As this is done, the steam that flows through the branch passages 72b is cooled and condensed by the cathode cooler 75. Water that is produced by the condensation flows downward in the branch passages 72b by gravity and is recovered in the reservoir portion 72c. The water recovered in the reservoir portion 72c is delivered to the mixing tank 54 by the recovery pump 76, mixed with the methanol, and then fed again to the electromotive unit 52.

Some of the air and steam that are fed to the second passage 72e pass through the exhaust valve 80, and are discharged into the body 14 through the exhaust port 78 and further to the outside through the vents 22 of the body. The carbon dioxide that is discharged from the anode side of the electromotive unit 52 passes through the second passage 72e, and is discharged into the body 14 through the exhaust port 78 and further to the outside through the vents 22 of the body.

While the fuel cell 10 is operating, the cooling fan 82 is actuated, whereupon the outside air is introduced into the body 14 through the vents 20 and 21 in the body. As shown in FIGS. 6 and 10, the outside air that is introduced into the body 14 through the vents 20 and the air in the body 14 pass around the cathode cooler 75 to cool it, and are then sucked into the fan case through one of the intake ports 84 for the cooling fan 82. The outside air that is introduced into the body 14 through the vents 21 and the air in the body 14 pass around the anode cooler 70 to cool it, and are then sucked into the fan case through the other intake port 84 for the fan 82.

The air sucked into the fan case is discharged into the body 14 through the exhaust ports 86a and 86b. The air discharged through the exhaust port 86a passes through the body 14 and is discharged to the outside through the vents 22. As this is done, the air discharged through the exhaust port 86a is mixed with the air, steam, and carbon dioxide that are discharged through the exhaust port 78 of the cathode passage. The resulting mixture is discharged to the outside of the body through the vents 22. The air discharged through the exhaust port 86b is discharged from the body 14 after having cooled the electromotive unit 52 and its surroundings. The electromotive unit 52 is cooled as heat is released through the fins 61 into the air that flows around it.

The concentration of the methanol in the mixing tank 54 is detected by the concentration sensor 88. The control section 29 actuates the recovery pump 76 in accordance with the detected concentration to feed the water in the reservoir portion 72c into the tank 54, thereby keeping the methanol concentration constant. The amount of water recovery or steam condensation in the cathode passage is adjusted by controlling the cooling capacity of the cathode cooler 75 in accordance with the level of the water recovered in the reservoir portion 72c. In this case, the cooling capacity of the cooler 75 is adjusted to regulate the water recovery amount by controlling drive voltage for the cooling fan 82 in accordance with the water level detected by the water level detector 77. The control section 29 controls the flow rate of the recovery pump 76 in accordance with the level of the water recovered in the reservoir portion 72c, thereby keeping the amount of the water in the reservoir portion 72c within the given range.

According to the fuel cell 10 constructed in this manner, the radiator fins 61 on the sidewalls 96 of the electromotive unit 52 radiate heat from the cells 90a, 90b and 90c to the ambiance, thereby cooling the cells. Thus, the cells can be prevented from being overheated. The fins 61 are arranged on the side faces of the electromotive unit 52, not including its opposite end faces. These side faces extend in the lamination direction of the cells 90a, 90b and 90c and are opposed to the cells. Accordingly, the cells 90a, 90b and 90c can be cooled equally, so that differences in temperature between the cells can be prevented.
Further, the fuel and air discharge passages 98b and 99b on the discharge side where the temperature reaches the highest level individually extend in the cell lamination direction. Therefore, they can be efficiently cooled by the radiator fins on the side faces of the electromotive unit. Thus, output variations between the laminated cells can be restrained to facilitate stable power generation. At the same time, polarity inversion or other failure in the cells can be prevented to ensure the fuel cell of improved reliability.

According to the present embodiment, the cathode passage is divided into a plurality of branch passages, which are cooled by means of the cathode cooler. In this way, the water discharged from the electromotive unit 52 can be recovered efficiently and reused for the power generation reaction. Accordingly, the problem of water shortage can be solved, and the fuel of a desired concentration can be supplied to the electromotive unit 52. Thus, the resulting fuel cell can perform prolonged, stable power generation. Further, a desired amount of water can be maintained for the stable power generation by adjusting the cooling capacity of the cathode cooler 75 to control the water recovery amount.

According to the present embodiment, moreover, exhaust air from the cooling fan 82 is mixed with exhaust air from the cathode passage and discharged to the outside of the body 14. Since the exhaust air from the cathode passage contains some moisture, water drops may possibly be formed around the vents 22 of the body 14. However, the moisture can be reduced to prevent formation of water drops by mixing the air from the cathode passage with the exhaust air from the fan 82. Thus, problems that are attributable to water drops can be prevented to ensure the high-reliability fuel cell.

The present invention is not limited directly to the embodiment described above, and in carrying out the invention various inventions may be made by suitably combining a plurality of components described in connection with the foregoing embodiment. For example, some of the components according to the above-described embodiment may be omitted. Furthermore, components of different embodiments may be combined as required.

According to the embodiment described above, the generator section comprises the fuel tank 50, electromotive unit 52, anode and cathode coolers 70 and 75, and mixing tank 54 that are arranged in the order named. However, this order of arrangement may be variously changed as required. If necessary, the number of cells that constitutes the electromotive unit may be varied. The fuel cell according to the present invention is not limited to the use for the personal computer described above, and may be also used as a power source for any other electronic devices, such as mobile devices, portable terminals, etc. The fuel cells are not limited to the DMFCs and may be of any other types, such as PEFCs (polymer electrolyte fuel cells). The cooling fan is not limited to the centrifugal fan and may alternatively be an axial flow fan.

## Claims

1. A fuel cell comprising:
an electromotive unit (52) for generating power based on a chemical reaction;
a fuel tank (50) for containing a fuel and supplying the fuel to the electromotive unit (52);
a mixing tank (54) connected to the fuel tank (52);
an air supply section (64) for supplying air to the electromotive unit (52); and
a cathode passage (72) which is connected to the electromotive unit (52) and through which products of power generation from the electromotive unit (52) can be discharged;
the electromotive unit including a plurality of cells (90a,90b,90c) laminated to one another and each having an anode (58a) and a cathode (58b) opposed to each other with an electrically conductive membrane (92a,92b) therebetween, a pair of end faces situated individually at two opposite ends of the cells (90a,90b,90c) in the direction of lamination thereof and extending across the lamination direction, a plurality of side faces extending in the cell lamination direction, and a cooling section (61) which is located on the side faces, not including the end faces, for cooling the electromotive unit (52);
**characterized in that**
the cathode passage (72) has a first passage (72a) which extends from the electromotive unit (52), a plurality of branch passages (72b) which diverge from the first passage (72a), a reservoir portion (72c) which communicates with the first passage (72a) and respective lower ends of the branch passages (72b), for storing water discharged from the first passage (72a) and water condensed in the branch passages (72b), and a recovery passage (72d) for guiding water from the reservoir portion (72c) into the mixing tank (54); and
radiator fins (74) mounted around the cathode passage (72) .

2. The fuel cell according to claim 1, **characterized in that** the electromotive unit (52) includes a fuel supply passage (98a) which extends in the cell lamination direction in the electromotive unit (52) and through which the fuel is supplied to the electromotive unit (52), a fuel discharge passage (98b) which extends in the cell lamination direction in the electromotive unit (52) and through which the fuel is discharged from the electromotive unit (52), and a plurality of fuel dividing passages (98c) which diverge from the fuel supply passage (98a) to supply the fuel to the respective anodes (58a) of the cells (90a,90b,90c) and are connected to the fuel discharge passage (98b).

3. The fuel cell according to claim 1 or 2, **characterized in that** the electromotive unit (52) includes an air supply passage (99a) which extends in the cell lamination direction in the electromotive unit (52) and through which air is supplied to the electromotive unit (52), an air discharge passage (99b) which extends in the cell lamination direction in the electromotive unit (52) and through which air is discharged from the electromotive unit (52), and a plurality of air dividing passages (99c) which diverge from the air supply passage (99a) to supply air to the respective cathodes (58b) of the cells (90a,90b,90c) and are connected to the air discharge passage (99b).

4. The fuel cell according to claim 3, **characterized by** further comprising a fuel circulation passage (66a,66b), which is connected to the fuel supply passage (98a) and the fuel discharge passage (98b) for circulating the fuel between the electromotive unit (52) and the fuel tank (50,54), and a radiator section (69,70) for cooling the fuel circulation passage (66a,66b).

5. The fuel cell according to any one of claims 1 to 4, **characterized in that** the cooling section (61) has a plurality of radiator fins arranged on the side faces of the electromotive unit (52).

6. The fuel cell according to any one of claims 1 to 5, **characterized in that** the electromotive unit (52) has separators (94) laminated between the adjacent cells (90a,90b,90c) and end plates (95a,95b) laminated, along with the cells (90a,90b,90c), individually to the opposite ends in the lamination direction, and the fuel dividing passages (98c) are defined by grooves formed on respective surfaces of the separators (94) and the respective inner surfaces of the end plates (95a,95b).

7. The fuel cell according to any one of claims 1 to 6, **characterized in that** the branch passages (72b) extend at an angle to the horizontal direction.

## Patentansprüche

1. Brennstoffzelle mit:
einer Elektro-Antriebseinheit (52) zum Erzeugen von Energie auf der Basis einer chemischen Reaktion,
einem Brennstoffbehälter (50) zum Aufnehmen eines Brennstoffs und zum Zuführen des Brennstoffs zu der Elektro-Antriebseinheit (52),
einem Mischbehälter (54), der mit dem Brennstoffbehälter (52) verbunden ist,
einem Luftzuführabschnitt (64) zum Zuführen von Luft zu der Elektro-Antriebseinheit (52), und
einem Kathodendurchgang (72), der mit der Elektro-Antriebseinheit (52) verbunden ist, und durch den Produkte der Energieerzeugung von der Elektro-Antriebseinheit (52) ausgetragen werden können,
wobei die Elektro-Antriebseinheit mehrere Zellen (90a,90b,90c), die aneinander bzw. aufeinander geschichtet sind und jeweils eine Anode (58a) und eine Kathode (58b) aufweisen, die einander mit einer elektrisch leitenden Membran (92a,92b) dazwischen gegenüberliegen, ein Paar Endflächen, die einzeln an zwei gegenüberliegenden Enden der Zellen (90a,90b,90c) in der Richtung von deren Schichtung gelegen sind und sich quer zur Schichtungsrichtung erstrecken, mehrere Seitenflächen, die sich in der Zell-Schichtungsrichtung erstrecken, und einen Kühlabschnitt (61), der sich an den Seitenflächen ausschließlich der Endflächen befindet, um die Elektro-Antriebseinheit (52) zu kühlen, aufweist,
**dadurch gekennzeichnet, dass**
der Kathodendurchgang (72) einen ersten Durchgang (72a) aufweist, der sich von der Elektro-Antriebseinheit (52) erstreckt, mehrere Zweigdurchgänge (72b), die von dem ersten Durchgang (72a) abzweigen, einen Reservoirabschnitt (72c), der mit dem ersten Durchgang (72a) und jeweiligen unteren Enden der Zweigdurchgänge (72b) kommuniziert, um aus dem ersten Durchgang (72a) ausgetragenes Wasser und in den Zweigdurchgängen (72b) kondensiertes Wasser zu speichern, und einen Rückführdurchgang (72d) zum Leiten von Wasser von dem Reservoirabschnitt (72c) in den Mischbehälter (54), und
Radiatorrippen (74), die um den Kathodendurchgang (72) herum angebracht sind.

2. Brennstoffzelle nach Anspruch 1, **dadurch gekennzeichnet, dass** die Elektro-Antriebseinheit (52) einen Brennstoffzuführdurchgang (98a), der sich in der Zell-Schichtungsrichtung in der Elektro-Antriebseinheit (52) erstreckt und durch den der Brennstoff der Elektro-Antriebseinheit (52) zugeführt wird, einen Brennstoffaustragungsdurchgang (98b), der sich in der Zell-Schichtungsrichtung in der Elektro-Antriebseinheit (52) erstreckt und durch den der Brennstoff aus der Elektro-Antriebseinheit (52) ausgetragen wird, sowie mehrere Brennstoffverteilungsdurchgänge (98c), die von dem Brennstoffzuführdurchgang (98a) abzweigen, um den Brennstoff den jeweiligen Anoden (58a) der Zellen (90a,90b,90c) zuzuführen, und die mit dem Brennstoffaustragungsdurchgang (98b) verbunden sind, aufweist.

3. Brennstoffzelle nach Anspruch 1 oder 2, **dadurch gekennzeichnet, dass** die Elektro-Antriebseinheit (52) einen Luftzuführdurchgang (99a), der sich in der Zell-Schichtungsrichtung in der Elektro-Antriebseinheit (52) erstreckt und durch den der Elektro-Antriebseinheit (52) Luft zugeführt wird, sowie einen Luftaustragungsdurchgang (99b), der sich in der Zell-Schichtungsrichtung in der Elektro-Antriebseinheit (52) erstreckt und durch den Luft aus der Elektro-Antriebseinheit (52) ausgetragen wird, sowie mehrere Luftverteilungsdurchgänge (99c), die von dem Luftzuführdurchgang (99a) abzweigen, um den jeweiligen Kathoden (58b) der Zellen (90a,90b,90c) Luft zuzuführen, und die mit dem Luftaustragungsdurchgang (99b) verbunden sind, aufweist.

4. Brennstoffzelle nach Anspruch 3, **dadurch gekennzeichnet, dass** sie ferner einen Brennstoffzirkulationsdurchgang (66a,66b), der mit dem Brennstoffzuführdurchgang (98a) und dem Brennstoffaustragungsdurchgang (98b) verbunden ist, um den Brennstoff zwischen der Elektro-Antriebseinheit (52) und dem Brennstoffbehälter (50,54) zu zirkulieren, und einen Radiatorabschnitt (69,70) zum Kühlen des Brennstoffzirkulationsdurchgangs (66a,66b) umfasst.

5. Brennstoffzelle nach einem der Ansprüche 1 bis 4, **dadurch gekennzeichnet, dass** der Kühlabschnitt (61) mehrere an den Seitenflächen der Elektro-Antriebseinheit (52) angeordnete Radiatorrippen aufweist.

6. Brennstoffzelle nach einem der Ansprüche 1 bis 5, **dadurch gekennzeichnet, dass** die Elektro-Antriebseinheit (52) zwischen den benachbarten Zellen (90a,90b,90c) geschichtete Separatoren (94) sowie zusammen mit den Zellen (90a,90b,90c) einzeln an den gegenüberliegenden Enden in der Schichtungsrichtung geschichtete Endplatten (95a,95b) aufweist, und die Brennstoffverteilungsdurchgänge (98c) durch an jeweiligen Oberflächen der Separatoren (94) und den jeweiligen Innenflächen der Endplatten (95a,95b) ausgebildete Nuten bzw. Rillen festgelegt sind.

7. Brennstoffzelle nach einem der Ansprüche 1 bis 6, **dadurch gekennzeichnet, dass** die Verzweigungsdurchgänge (72b) sich unter einem Winkel zur Horizontalrichtung erstrecken.

## Revendications

1. Pile à combustible comprenant :
une unité électromotrice (52) destinée à générer une puissance sur la base d'une réaction chimique ;
un réservoir de combustible (50) destiné à contenir un combustible et à fournir le combustible à l'unité électromotrice (52) ;
un réservoir de mélange (54) relié au réservoir de combustible (52) ;
une section d'alimentation en air (64) destinée à fournir de l'air à l'unité électromotrice (52) ; et
un passage de cathode (72) qui est relié à l'unité électromotrice (52) et par lequel les produits de la génération de puissance provenant de l'unité électromotrice (52) peuvent être évacués ;
l'unité électromotrice comprenant une pluralité de cellules (90a, 90b, 90c) stratifiées les unes sur les autres et ayant chacune une anode (58a) et une cathode (58b) opposées l'une à l'autre avec une membrane électriquement conductrice (92a, 92b) entre celles-ci, une paire de faces d'extrémité situées individuellement à deux extrémités opposées des cellules (90a, 90b, 90c) dans la direction de stratification de celles-ci et s'étendant au sein de la direction de stratification, une pluralité de faces latérales s'étendant dans la direction de stratification des cellules, et une section de refroidissement (61) qui est située sur les faces latérales, ne comprenant pas les faces d'extrémité, destinée à refroidir l'unité électromotrice (52) ;
**caractérisée en ce que**
le passage de cathode (72) possède un premier passage (72a) qui s'étend depuis l'unité électromotrice (52), une pluralité de passages de ramification (72b) qui divergent du premier passage (72a), une partie de réservoir (72c) qui communique avec le premier passage (72a) et les extrémités inférieures respectives des passages de ramification (72b), destinée à stocker l'eau évacuée par le premier passage (72a) et l'eau condensée dans les passages de ramification (72b), et un passage de récupération (72d) destiné à guider l'eau provenant de la partie de réservoir (72c) vers le réservoir de mélange (54) ; et
des ailettes de radiateur (74) montées autour du passage de cathode (72).

2. Pile à combustible selon la revendication 1, **caractérisée en ce que** l'unité électromotrice (52) comprend un passage d'alimentation en combustible (98a) qui s'étend dans la direction de stratification des cellules dans l'unité électromotrice (52) et par lequel le combustible est fourni à l'unité électromotrice (52), un passage d'évacuation de combustible (98b) qui s'étend dans la direction de stratification des cellules dans l'unité électromotrice (52) et par lequel le combustible est évacué de l'unité électromotrice (52), et une pluralité de passages de division de combustible (98c) qui divergent du passage d'alimentation en combustible (98a) afin de fournir le combustible aux anodes respectives (58a) des cellules (90a, 90b, 90c) et qui sont reliés au passage d'évacuation de combustible (98b).

3. Pile à combustible selon la revendication 1 ou 2, **caractérisée en ce que** l'unité électromotrice (52) comprend un passage d'alimentation en air (99a) qui s'étend dans la direction de stratification des cellules dans l'unité électromotrice (52) et par lequel de l'air est fourni à l'unité électromotrice (52), un passage d'évacuation de l'air (99b) qui s'étend dans la direction de stratification des cellules dans l'unité électromotrice (52) et par lequel l'air est évacué de l'unité électromotrice (52), et une pluralité de passages de division de l'air (99c) qui divergent du passage d'alimentation en air (99a) afin de fournir de l'air aux cathodes respectives (58b) des cellules (90a, 90b, 90c) et qui sont reliés au passage d'évacuation de l'air (99b).

4. Pile à combustible selon la revendication 3, **caractérisée en ce qu'**elle comprend en outre un passage de circulation de combustible (66a, 66b), qui est relié au passage d'alimentation en combustible (98a) et au passage d'évacuation de combustible (98b) fin de faire circuler le combustible entre l'unité électromotrice (52) et le réservoir de combustible (50, 54), et une section de radiateur (69, 70) destinée à refroidir le passage de circulation de combustible (66a, 66b).

5. Pile à combustible selon l'une quelconque des revendications 1 à 4, **caractérisée en ce que** la section de refroidissement (61) possède une pluralité d'ailettes de radiateur agencées sur les faces latérales de l'unité électromotrice (52).

6. Pile à combustible selon l'une quelconque des revendications 1 à 5, **caractérisée en ce que** l'unité électromotrice (52) possède des séparateurs (94) stratifiés entre les cellules adjacentes (90a, 90b, 90c) et des plaques d'extrémité (95a, 95b) stratifiées, avec les cellules (90a, 90b, 90c), de manière individuelle par rapport aux extrémités opposées dans la direction de stratification, et les passages de division de combustible (98c) sont définis par des rainures formées sur les surfaces respectives des séparateurs (94) et les surfaces internes respectives des plaques d'extrémité (95a, 95b).

7. Pile à combustible selon l'une quelconque des revendications 1 à 6, **caractérisée en ce que** les passages de ramification (72b) s'étendent à un angle par rapport à la direction horizontale.
